(19) Europäisches Patentamt
European Patent Office
Office européen des brevets

(11) Veröffentlichungsnummer: **0 029 543**
**A1**

(12) **EUROPÄISCHE PATENTANMELDUNG**

(21) Anmeldenummer: 80106910.5

(22) Anmeldetag: 08.11.80

(51) Int. Cl.³: C 07 C 69/74
C 07 C 69/753, C 07 C 121/75
C 07 C 67/08, A 01 N 53/00

(30) Priorität: 23.11.79 DE 2947209

(43) Veröffentlichungstag der Anmeldung: 03.06.81 Patentblatt 81/22

(84) Benannte Vertragsstaaten: BE CH DE FR GB IT LI NL

(71) Anmelder: BAYER AG
Zentralbereich Patente, Marken und Lizenzen
D-5090 Leverkusen 1, Bayerwerk(DE)

(72) Erfinder: Fuchs, Rainer, Dr.
Roeberstrasse 8
D-5600 Wuppertal 1(DE)

(72) Erfinder: Naumann, Klaus, Dr.
Richard-Wagner-Strasse 9
D-5090 Leverkusen 1(DE)

(72) Erfinder: Hammann, Ingeborg, Dr.
Belfortstrasse 9
D-5000 Köln 1(DE)

(72) Erfinder: Homeyer, Bernhard, Dr.
Obere Strasse 28
D-5090 Leverkusen 3(DE)

(72) Erfinder: Behrenz, Wolfgang, Dr.
Untergründemich 14
D-5063 Overath(DE)

(72) Erfinder: Stendel, Wilhelm, Dr.
In den Birken 55
D-5600 Wuppertal 1(DE)

(54) **Fluor-substituierte Spirocarbonsäure-benzylester, Verfahren zu ihrer Herstellung und ihre Verwendung in Schädlingsbekämpfungsmitteln.**

(57) Es wurden neue fluor-substituierte Spirocarbonsäurebenzylester der Formel I gefunden

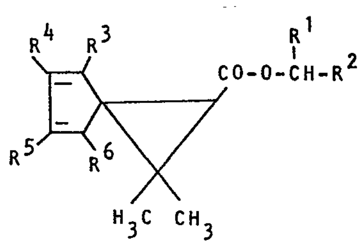

(I)

in welcher $R^1$-$R^6$ die in der Beschreibung angegebene Bedeutung besitzen. Die neuen fluor-substituierten Spirocarbonsäurebenzylester der Formel I zeichnen sich durch hohe insektizide und akarizide Wirksamkeit aus.

EP 0 029 543 A1

Croydon Printing Company Ltd.

BAYER AKTIENGESELLSCHAFT 5090 Leverkusen, Bayerwerk
Zentralbereich Rt/Kü-c
Patente, Marken und Lizenzen Typ Ia

# Fluor-substituierte Spirocarbonsäure-benzylester, Verfahren zu ihrer Herstellung und ihre Verwendung in Schädlingsbekämpfungsmitteln

Die Erfindung betrifft neue fluor-substituierte Spirocarbonsäure-benzylester, ein Verfahren zu ihrer Herstellung und ihre Verwendung in Schädlingsbekämpfungsmitteln, insbesondere in Insektiziden und Akariziden.

Es ist bekannt, daß bestimmte Cyclopropancarbonsäureester, wie z.B. 3-(2-Methyl-pro-1-en-1-yl)-2,2-dimethylcyclopropan-1-carbonsäure-3-phenoxybenzylester und 3,3-Dimethylspio-(cyclopropan-1,1'-inden)-2-carbonsäure-3-phenoxybenzylester insektizide und akarizide Eigenschaften aufweisen (vergleiche US-PS 3 962 458 und GB-PS 1 234 858). Die Wirkung dieser Verbindungen ist jedoch, insbesondere bei niedrigen Wirkstoffkonzentrationen und Aufwandmengen, nicht immer zufriedenstellend.

Es wurden nun neue fluor-substituierte Spirocarbonsäurebenzylester der Formel I

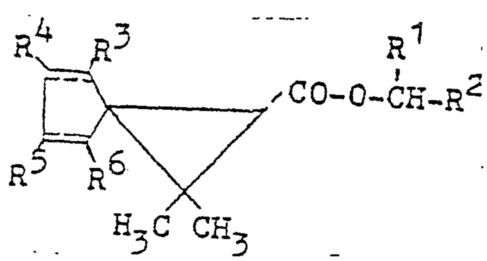

(I)

in welcher

$R^1$ für Wasserstoff, Cyano, Alkyl, Alkenyl oder Alkinyl, mit jeweils bis zu 4 Kohlenstoffatomen,

$R^2$ für einen durch Halogen und/oder gegebenenfalls halogen-substituiertes Phenoxy substituierten Phenyl-Rest steht mit der Maßgabe, daß der Rest $R^2$ insgesamt wenigstens einen Fluor-Substituenten enthält,

$R^3$, $R^4$, $R^5$ und $R^6$ entweder einzeln für Wasserstoff, Halogen, Alkyl, oder jeweils $R^3$ und $R^4$ und/oder $R^5$ und $R^6$ zusammen für Alkandiyl (Alkylen) oder für einen anellierten Benzorest stehen und die mit $R^3$, $R^4$, $R^5$ und $R^6$ verbundenen C-Atome des spirocyclischen Ringes sowohl doppelt als auch einfach miteinander verknüpft sein können.

Man erhält die neuen Verbindungen der Formel I, wenn man Spirocarbonsäuren der Formel II

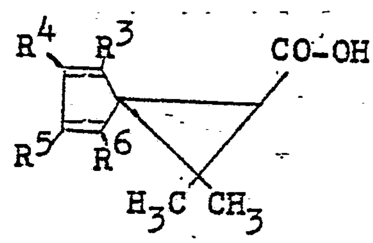

(II)

in welcher

$R^3$, $R^4$, $R^5$ und $R^6$ die oben angegebnen Bedeutungen haben,

oder reaktionsfähige Derivate derselben

mit Alkoholen der Formel III

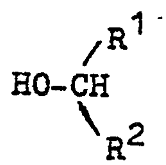

(III)

in welcher

$R^1$ und $R^2$ die oben angegebenen Bedeutungen haben,

oder mit reaktionsfähigen Derivaten derselben,

gegebenenfalls in Gegenwart von Säureakzeptoren und/oder Katalysatoren und gegebenenfalls unter Verwendung von Verdünnungsmitteln umsetzt.

Die neuen fluor-substituierten Spirocarbonsäure-benzylester der Formel I zeichnen sich durch hohe insektizide und akarizide Wirksamkeit aus.

Überraschenderweise zeigen die erfindungsgemäßen Verbindungen der Formel (I) eine erhblich höhere insektizide und akarizide Wirkung als aus dem Stand der Technik bekannte Verbindungen analoger Konstitution und gleicher Wirkungsrichtung.

Die allgemeine Formel (I) schließt die verschiedenen möglichen Stereisomeren und optisch aktiven Isomeren sowie deren Mischungen mit ein.

Gegenstand der Erfindung sind vorzugsweise Verbindungen der Formel (I), in welcher

$R^1$ für Wasserstoff oder Cyano steht,

$R^2$ für Pentafluorphenyl, 4-Fluor-3-phenoxyphenyl, 3-(4-Fluor-phenoxy)-phenyl oder 4-Fluor-3-(4-fluor-phenoxy)-phenyl steht,

$R^3$ und $R^4$ für Wasserstoff stehen sowie

$R^5$ und $R^6$ zusammen für einen anellierten Benzorest stehen und gleichzeitig die mit $R^3$ und $R^4$ sowie mit $R^5$ und $R^6$ verbundenen Kohlenstoffatome über Doppelbindungen verknüpft sind.

In einer bevorzugten Variante (a) des Herstellungsverfahrens für die Verbindungen der Formel (I) werden Spirocarbonsäurechloride der Formel II a

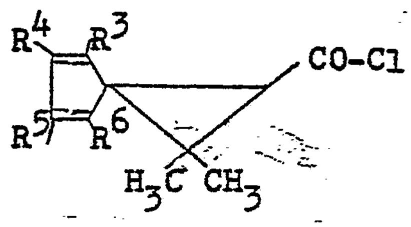

(II a)

in welcher

$R^3$, $R^4$, $R^5$ und $R^6$ die oben angegebenen Bedeutungen haben,

mit Benzylalkoholen der Formel III (oben) in Gegenwart von Säureakzeptoren und unter Verwendung von Verdünnungsmitteln umgesetzt.

In einer weiteren bevorzugten Verfahrensvariante (b), insbesondere zur Herstellung von Verbindungen der Formel

(I), in welcher $R^1$ für Cyano und $R^2$ für fluor-substituiertes Phenoxy-phenyl steht, wird das Säurechlorid der Formel II a (oben) mit entsprechenden Phenoxy-benzaldehyden der Formel IV

$$OCH-R^2 \qquad (IV)$$

in welcher

$R^2$ für fluor-substituiertes Phenoxy-phenyl steht,

und wenigstens der äquimolaren Menge eines Alkalicyanids (Natrium- oder Kalium-cyanid) in Gegenwart von Wasser und eines mit Wasser nicht mischbaren organischen Lösungsmittels und gegebenenfalls in Gegenwart eines Katalysators umgesetzt.

Als weitere reaktionsfähige Derivate der Carbonsäure der Formel (II) sind deren Niederalkylester zu nennen, welche mit Alkoholen der Formel (III) nach üblichen Methoden umgesetzt werden können.

Alkali-, Erdalkali- oder Ammoniumsalze der Carbonsäure (II) können mit Benzylhalogeniden, welche sich von den Benzylalkoholen der Formel (III) ableiten, ebenfalls zu Verbindungen der Formel (I) umgesetzt werden.

Verwendet man als Ausgangsstoffe bei der Verfahrensvariante (a) beispielsweise 3,3-Dimethyl-spiro-(cyclopropan-1,1'-inden)-2-carbonsäurechlorid und Pentafluorbenzylalkohol, und bei Variante (b) 3,3-Dimethylspiro-(cyclopropan-1,1'-inden)-2-carbonsäure-chlorid und

4-Fluor-3-(4-fluor-phenoxy)-benzaldehyd, so können die Reaktionen bei den beiden Verfahrensvarianten durch folgendes Reaktionsschema skizziert werden:

a)

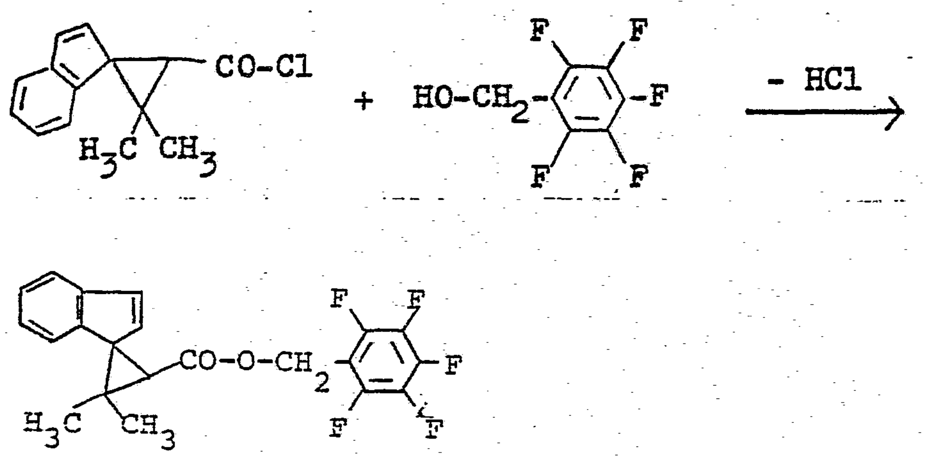


b)

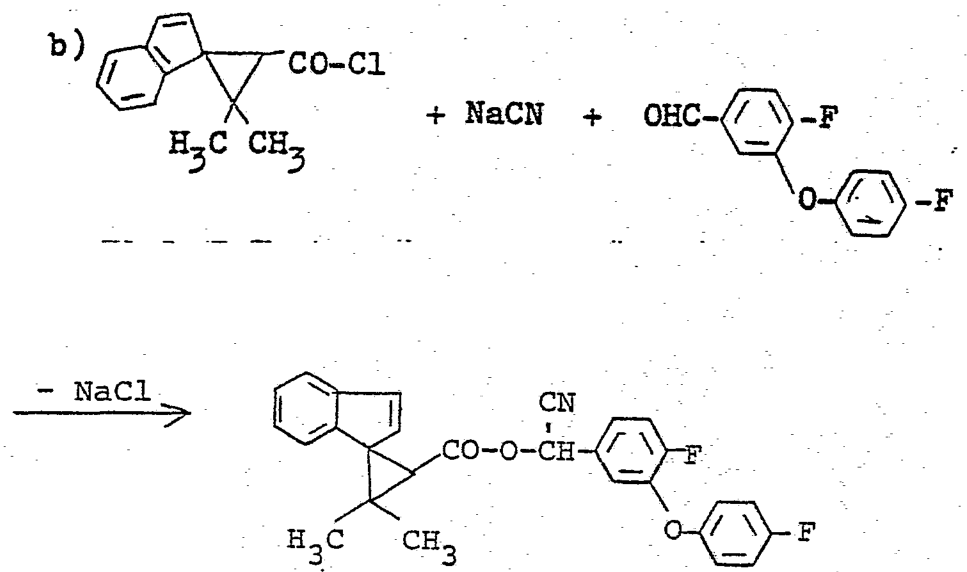


Die als Ausgagsverbindungen zu verwendenden Spirocarbonsäuren der Formel (II) und entsprechende Säurechloride der Formel (II a) sind bereits bekannt (vergleiche z.B. US-PS 3 962 458, DE-OS 2 727 909 und 2 713 651, BE-PS 846 544, 820 418 und JP 51/148 024).

Soweit die Säurechloride der Formel (II a) noch nicht bekannt sind, können sie auf übliche Weise hergestellt werden, beispielsweise durch Umsetzung der entsprechenden Säure der Formel II mit Thionylchlorid, gegebenenfalls in Gegenwart eines Verdünnungsmittels, wie z.B. Tetrachlorkohlenstoff, bei Temperaturen zwischen 10 und 100°C.

Die weiter als Ausgangsstoffe zu verwendenden Benzylalkohole sind durch Formel (III) definiert. Vorzugsweise stehen darin $R^1$ und $R^2$ für diejenigen Reste, welche bereits bei der Definition der Reste $R^1$ und $R^2$ in Formel (I) als bevorzugt genannt wurden.

Als Beispiele für die Ausgangsverbindungen der Formel (III) seien genannt:
Pentafluorbenzylalkohol, 4-Fluor-3-phenoxy-benzylalkohol, 3-(4-Fluor-phenoxy)-benzylalkohol, 4-Fluor-3-(4-fluor-phenoxy)-benzylalkohol und 3-(4-Fluor-phenoxy)-α-cyano-benzylalkohol.

Die Ausgangsverbindungen der Formel (III) sind bereits bekannt (vergleiche GB-PS 1 078 511, DE-OS' 2 621 433, 2 709 264 und 2 739 854).

Die als Ausgangsstoffe verwendbaren Phenoxy-benzaldehyde sind durch Formel (IV) definiert. Vorzugsweise steht darin $R^2$ für diejenigen Reste, welche bereits bei der Definition von $R^2$ in Formel (I) als bevorzugt genannt wurden. Als Beispiele seien genannt:
4-Fluor-3-phenoxy-benzaldehyd, 3-(4-Fluor-phenoxy)-benzaldehyd und 4-Fluor-3-(4-fluor-phenoxy)-benzaldehyd.

Die Phenoxybenzaldehyde der Formel (IV) sind bereits bekannt (vergleiche DE-OS' 2 621 433, 2 709 264 und 2 739 854).

Das Verfahren zur Herstellung der neuen Verbindungen der Formel (I) wird in allen Varianten vorzugsweise unter Verwendung von Verdünnungsmitteln durchgeführt. Als Verdünnungsmittel kommen praktisch alle inerten organischen Lösungsmittel in Frage. Hierzu gehören insbesondere aliphatische und aromatische, gegebenenfalls halogenierte Kohlenwasserstoffe, wie Pentan, Hexan, Heptan, Cyclohexan, Petrolether, Benzin, Ligrein, Benzol, Toluol, Xylol, Methylenchlorid, Ethylenchlorid, Chloroform, Tetrachlorkohlenstoff, Chlorbenzol und O-Dichlorbenzol, Ether, wie Diethyl- und Dibutylether. Glycoldimethylether und Diglycloldimethylether, Tetrahydrofuran und Dioxan, Ketone, wie Aceton, Methyl-ethyl-, Methyl-isorpropyl- und Methyl-isobutyl-keton, Ester, wie Essigsäure-methylester und -ethylester, Nitrile, wie z.B. Acetonitril und Propionitril, Amide, wie z.B. Dimethylformamid, Dimethylacetamid und N-Methylpyrroliden, sowie Dimethylsulfoxid, Tetramethylensulfon und Hexamethylphosphorsäuretriamid.

Die Variante (a) des erfindungsgemäßen Verfahrens wird vorzugsweise in Gegenwart von Säureakzeptoren durchgeführt. Als Säureakzeptoren können die üblichen Säurebindemittel Verwendung finden. Besonders bewährt haben sich Alkalicarbonate und -alkoholate, wie Natrium- und Kaliumcarbonat, Natrium- und Kaliummethylat bzw. -ethylat, ferner aliphatische, aromatische oder heterocyclische Amine, beispielsweise Triethylamin, Trimethylamin,

Dimethylanilin, Dimethylbenzylamin, Pyridin, Diazabicyclooctan, Diazabicyclononan und Diazabicycloundecen,

Die Variante (b) des erfindungsgemäßen Verfahrens wird in Gegenwart von Wasser und eines der oben genannten organischen Lösungsmittel, soweit es mit Wasser nicht mischbar ist, durchgeführt. Hierfür sind insbesondere die oben genannten Kohlenwasserstoffe geeignet.

Als Katalysatoren werden bei der Verfahrensvariante (b) vorzugsweise Verbindungen verwendet, welche zum Transfer von Anionen aus Wasser in organische Lösungsmittel geeignet sind. Beispiele hierfür sind Benzyl-triethylammonium-hydrogensulfat, Tetrabutylammonium-bromid und Methyl-trioctyl-ammonium-chlorid (Aliquat 336).

In allen Verfahrensvarianten kann die Reaktionstemperatur innerhalb eines größeren Bereichs variiert werden. Im allgemeinen arbeitet man zwischen 0 und 100°C, vorzugsweise bei 10 bis 50°C.

Das erfindungsgemäße Verfahren wird im allgemeinen bei Normaldruck durchgeführt. Zur Durchführung des erfindungsgemäßen Verfahrens werden die Ausgangsstoffe gewöhnliche in äquimolaren Mengen eingesetzt. Ein Überschuß der einen oder anderen Reaktionskomponente bringt keine wesentlichen Vorteile. Die Ausgangsstoffe werden in geeigneten Verdünnungsmitteln zusammen gegeben und, gegebenenfalls nach Zugabe eines Säureakzeptors und/oder eines Katalysatores, bis zum Reaktionsende gerührt.

Die Aufarbeitung kann nach üblichen Methoden durchgeführt werden, beispielsweise indem man das Reaktionsgemisch gegebenenfalls mit Wasser und/oder einem mit Wasser nicht mischbaren organischen Lösungsmittel, wie z.B. Toluol, verdünnt, die organische Phase abtrennt, mit Wasser wäscht, trocknet, filtriert und vom Filtrat das Lösungsmittel unter vermindertem Druck und bei mäßig erhöhter Temperatur sorgfältig abdestilliert ("andestilliert").

Die Wirkstoffe eignen sich bei guter Pflanzenverträglichkeit und günstiger Warmblütertoxizität zur Bekämpfung von tierischen Schädlingen, insbesondere Insekten, und Spinnentieren, die in der Landwirtschaft, in Forsten, im Vorrats- und Materialschutz sowie auf dem Hygienesektor vorkommen.Sie sind gegen normal sensible und resistente Arten sowie gegen alle oder einzelne Entwicklungsstadien wirksam. Zu den oben erwähnten Schädlingen gehören:

Aus der Ordnung der Isopoda z.B. Oniscus asellus, Armadillidium vulgare, Porcellio scaber.
Aus der Ordnung der Diplopoda z.B. Blaniulus guttulatus.
Aus der Ordnung der Chilopoda z.B. Geophilus carpophagus, Scutigera spec.
Aus der Ordnung der Symphyla z.B. Scutigerella immaculata.
Aus der Ordnung der Thysanura z.B. Lepisma saccharina.
Aus der Ordnung der Collembola z.B. Onychiurus armatus.
Aus der Ordnung der Orthoptera z.B. Blatta orientalis, Periplaneta americana, Leucophaea maderae, Blattella germanica, Acheta domesticus, Gryllotalpa spp., Locusta migratoria migratorioides, Melanoplus differentialis, Schistocerca gregaria.

Aus der Ordnung der Dermaptera z.B. Forficula auricularia.
Aus der Ordnung der Isoptera z.B. Reticulitermes spp..
Aus der Ordnung der Anoplura z.B. Phylloxera vastatrix, Pemphigus spp., Pediculus humanus corporis, Haematopinus spp., Linognathus spp.
Aus der Ordnung der Mallophaga z.B. Trichodectes spp., Damalinea spp.
Aus der Ordnung der Thysanoptera z.B. Hercinothrips femoralis, Thrips tabaci.

Aus der Ordnung der Heteroptera z.B. Eurygaster spp., Dysdercus intermedius, Piesma quadrata, Cimex lectularius, Rhodnius prolixus, Triatoma spp.
Aus der Ordnung der Homoptera z.B. Aleurodes brassicae, Bemisia tabaci, Trialeurodes vaporariorum, Aphis gossypii, Brevicoryne brassicae, Cryptomyzus ribis, Doralis fabae, Doralis pomi, Eriosoma lanigerum, Hyalopterus arundinis, Macrosiphum avenae, Myzus spp.,Phorodon humuli, Rhopalosiphum padi, Empoasca spp., Euscelis bilobatus, Nephotettix cincticeps, Lecanium corni, Saissetia oleae, Laodelphax striatellus, Nilaparvata lugens, Aonidiella aurantii, Aspidiotus hederae, Pseudococcus spp. Psylla spp.
Aus der Ordnung der Lepidoptera z.B. Pectinophora gossypiella, Bupalus piniarius, Cheimatobia brumata, Lithocolletis blancardella, Hyponomeuta padella, Plutella maculipennis, Malacosoma neustria, Euproctis chrysorrhoea, Lymantria spp. Bucculatrix thurberiella, Phyllocnistis citrella, Agrotis spp., Euxoa spp., Feltia spp. Earias insulana, Heliothis spp., Laphygma exigua, Mamestra brassicae, Panolis flammea, Prodenia litura, Spodoptera spp., Trichoplusia ni, Carpocapsa pomonella, Pieris spp., Chilo spp., Pyrausta nubilalis, Ephestia kuehniella, Galleria mellonella, Cacoecia podana, Capua reticulana, Choristoneura fumiferana, Clysia ambiguella, Homona magnanima, Tortrix viridana.

Aus der Ordnung der Coleoptera z.B. Anobium punctatum, Rhizopertha dominica, Bruchidius obtectus, Acanthoscelides obtectus, Hylotrupes bajulus, Agelastica alni, Leptinotarsa decemlineata, Phaedon cochleariae, Diabrotica spp., Psylliodes chrysocephala, Epilachna varivestis, Atomaria spp., Oryzaephilus surinamensis, Anthonomus spp., Sitophilus spp., Otiorrhynchus sulcatus, Cosmopolites sordidus, Ceuthorrhynchus assimilis, Hypera postica, Dermestes spp., Trogoderma spp., Anthrenus spp., Attagenus spp., Lyctus spp., Meligethes aeneus, Ptinus spp., Niptus hololeucus, Gibbium psylloides, Tribolium spp., Tenebrio molitor, Agriotes spp., Conoderus spp., Melolontha melolontha, Amphimallon solstitialis, Costelytra zealandica.

Aus der Ordnung der Hymenoptera z.B. Diprion spp., Hoplocampa spp., Lasius spp., Monomorium pharaonis, Vespa spp.

Aus der Ordnung der Diptera z.B. Aedes spp., Anopheles spp., Culex spp., Drosophila melanogaster, Musca spp., Fannia spp., Calliphora erythrocephala, Lucilia spp., Chrysomyia spp., Cuterebra spp., Gastrophilus spp., Hyppobosca spp., Stomoxys spp., Oestrus spp., Hypoderma spp., Tabanus spp., Tannia spp., Bibio hortulanus, Oscinella frit, Phorbia spp., Pegomyia hyoscyami, Ceratitis capitata, Dacus oleae, Tipula paludosa.

Aus der Ordnung der Siphonaptera z.B. Xenopsylla cheopis, Ceratophyllus spp..

Aus der Ordnung der Arachnida z.B. Scorpio maurus, Latrodectus mactans.

Aus der Ordnung der Acarina z.B. Acarus siro, Argas spp., Ornithodoros spp., Dermanyssus gallinae, Eriophyes ribis, Phyllocoptruta oleivora, Boophilus spp., Rhipicephalus spp., Amblyomma spp., Hyalomma spp., Ixodes spp., Psoroptes spp., Chorioptes spp., Sarcoptes spp., Tarsonemus spp., Bryobia praetiosa, Panonychus spp., Tetranychus spp..

Die Wirkstoffe können in die üblichen Formulierungen übergeführt werden, wie Lösungen, Emulsionen, Suspensionen, Pulver, Schäume, Pasten, Granulate, Aerosole, Wirkstoff-imprägnierte Natur- und synthetische Stoffe, Feinstverkapselungen in polymeren Stoffen und in Hüllmassen für Saatgut, ferner in Formulierungen mit Brennsätzen, wie Räucherpatronen, -dosen, -spiralen u.ä., sowie ULV-Kalt- und Warmnebel-Formulierungen.

Diese Formulierungen werden in bekannter Weise hergestellt, z.B. durch Vermischen der Wirkstoffe mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol, oder Alkylnaphthaline, chlorierte Aromaten oder chlorierte aliphatische Kohlenwasserstoffe, wie Chlorbenzole, Chloräthylene oder Methylenchlorid, aliphatische Kohlenwasserstoffe, wie Cyclohexan oder Paraffine, z.B. Erdölfraktionen, Alkohole, wie Butanol oder Glycol sowie deren Äther und Ester, Ketone, wie Aceton, Methyläthylketon, Methylisobutylketon oder Cyclohexanon, stark polare Lösungsmittel, wie Dimethylformamid und Dimethylsulfoxid, sowie Wasser; mit verflüssigten gasförmigen Streckmitteln oder Trägerstoffen sind solche Flüssigkeiten gemeint, welche bei normaler Temperatur und unter Normaldruck gasförmig sind, z.B. Aerosol-Treibgas, wie Halogenkohlenwasserstoffe sowie Butan, Propan, Stickstoff

und Kohlendioxid; als feste Trägerstoffe kommen in Frage: z.B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate; als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengel; als Emulgier- und/oder schaumerzeugende Mittel kommen in Frage: z.B. nichtionogene und anionische Emulgatoren, wie Polyoxyäthylen-Fettsäure-Ester, Polyoxyäthylen-Fettalkohol-Äther, z.B. Alkylarylpolyglykol-äther, Alkylsulfonate, Alkylsulfate, Arylsulfonate sowie Eiweißhydrolysate; als Dispergiermittel kommen in Frage: z.B. Lignin-Sulfitablaugen und Methylcellulose.

Es können in den Formulierungen Haftmittel wie Carboxymethylcellulose, natürliche und synthetische pulverige, körnige und latexförmige Polymere verwendet werden, wie Gummiarabicum, Polyvinylalkohol, Polyvinylacetat.

Es können Farbstoffe wie anorganische Pigmente, z.B. Eisenoxid, Titanoxid, Ferrocyanblau und organische Farbstoffe, wie Alizarin-, Azo-, Metall-, Phthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent Wirkstoff, vorzugsweise zwischen 0,5 und 90 %.

Die Anwendung der erfindungsgemäßen Wirkstoffe erfolgt in Form ihrer handelsüblichen Formulierungen und/oder den aus diesen Formulierungen bereiteten Anwendungsformen.

Der Wirkstoffgehalt der aus den handelsüblichen Formulierungen bereiteten Anwendungsformen kann in weiten Bereichen variieren. Die Wirkstoffkonzentration der Anwendungsformen kann von 0,0000001 bis zu 100 Gew.-% Wirkstoff, vorzugsweise zwischen 0,0001 und 1 Gew.-% liegen.

Die Anwendung geschieht in einer den Anwendungsformen angepaßten üblichen Weise.

Bei der Anwendung gegen Hygiene- und Vorratsschädlinge zeichnen sich die Wirkstoffe durch eine hervorragende Residualwirkung auf Holz und Ton sowie durch eine gute Alkalistabilität auf gekälkten Unterlagen aus.

Die Anwendung der erfindungsgemäßen Wirkstoffe erfolgt im Veterinärsektor in bekannter Weise, wie durch dermale Anwendung, beispielsweise in Form des Tauchens (dip), Absprühens (spray), Aufgießen (pour-on and spot-on) und des Einpuderns, durch parenterale Anwendung, beispielsweise in Form der Injektion, sowie durch orale Anwendung über das Futter oder Trinkwasser, beispielsweise in Form von Tabletten, Kapseln, Pulvern, Granulaten oder Tränken, und/oder im sogenannten feed-trough-Verfahren zur Bekämpfung von Insekten im Kot von Warmblütern.

Herstellungsbeispiele:

Beispiel 1

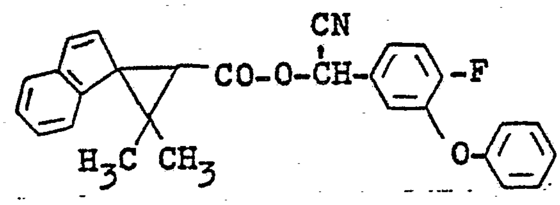

5 g (0,0232 Mol) 3-Phenoxy-4-fluor-benzaldehyd und 5,4 g (0,0232 Mol) 3,3-Dimethylspiro-(cyclopropan-1,1'-inden)-2-carbonsäurechlorid werden zusammen unter Rühren bei 20 - 25°C zu einer Mischung von 1,8 g Natriumcyanid, 2,7 ml Wasser, 100 ml n-Hexan uns 0,5 g Tetrabutylammoniumbromid getropft und dann 4 Stunden bei 20 - 25°C gerührt. Anschließend wird die Reaktionsmischung mit 300 ml Toluol versetzt und 2 mal mit je 300 ml Wasser ausgeschüttelt. Die organische Phase wird abgetrennt, über Magnesiumsulfat getrocknet und das Lösungsmittel im Wasserstrahlvakuum abdestilliert. Letzte Lösungsmittelreste werden durch kurzes Andestillieren bei 60°C/1 Torr Badtemperatur entfernt. Man erhält 8,1 g (79,5 % der Theorie) 3,3-Dimethylspiro-(cyclopropan-1,1'-inden)-2-carbonsäure-α-cyano-3-phenoxy-4-fluor-benzylester als zähes Öl. Die Struktur wird durch das $^{1}H$-NMR-Spektrum bestätigt.

Beispiel 2

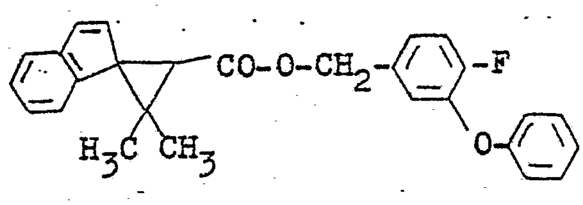

5,05 g (0,0232 Mol) 3-Phenoxy-4-fluor-benzylalkohol und 5,4 g (0,0232 Mol) 3,3-Dimethyl-spiro-(cyclopropan-1,1'-inden)-2-carbonsäurechlorid werden in 100 ml wasserfreiem Toluol gelöst und bei 20-25°C 2,5 g Pyridin, gelöst in 50 ml Toluol, unter Rühren zugetropft. Anschließend wird weitere 3 Stunden bei 25 - 35°C gerührt. Das Reaktionsgemisch wird in 15o0 mol Wasser, dem 5 ml konzentrierte Salzsäure zugesetzt werden, gegossen, die organische Phase abgetrennt und nochmals mit 100 ml Wasser gewaschen. Anschließend wird die Toluolphase über Natriumsulfat getrocknet und das Lösungsmittel im Wasserstrahlvakuum abdestilliert. Letzte Lösungsmittelreste werden duch kurzes Andestillieren bei 60°C/1 Torr Badtempertur entfernt. Man erhält 8,3 g (86,4 % der Theorie) 3,3-Dimethyl-spiro-(cyclopropan-1,1'-inden)-2-carbonsäure-3-phenoxy-4-fluorbenzylester als zähes Öl. Die Struktur wird durch das $^{1}H$-NMR-Spektrum bestätigt.

Beispiel A

Phaedon-Larven-Test

Lösungsmittel: 3 Gewichtsteile Aceton
Emulgator: 1 Gewichtsteil Alkylarylpolyglykoläther

Zur Herstellung einer zweckmäßigen Wirkstoffzubereitung vermischt man 1 Gewichtsteil Wirkstoff mit der angegebenen Menge Lösungsmittel und der angegebenen Menge Emulgator und verdünnt das Konzentrat mit Wasser auf die gewünschte Konzentration.

Kohlblätter (Brassica oleracea) werden durch Tauchen in die Wirkstoffzubereitung der gewünschten Konzentration behandelt und mit Meerrettichblattkäfer-Larven (Phaedon cochleariae) besetzt, solange die Blätter noch feucht sind.

Nach der gewünschten Zeit wird die Abtötung in % bestimmt. Dabei bedeutet 100 %, daß alle Käfer-Larven abgetötet wurden; 0 % bedeutet, daß keine Käfer-Larven abgetötet wurden.

Bei diesem Test zeigen z.B. die folgenden Verbindungen der Herstellungsbeispiele überlegene Wirksamkeit gegenüber dem Stand der Technik: 1.

Beispiel B

Grenzkonzentrations-Test / Bodeninsekten

Testinsekt: Phorbia Antiqua-Maden (im Boden)
Lösungsmittel: 3 Gewichtsteile Aceton
Emulgator: 1 Gewichtsteil Alkylarylpolyglykoläther

Zur Herstellung einer zweckmäßigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration.

Die Wirkstoffzubereitung wird innig mit dem Boden vermischt. Dabei spielt die Konzentration des Wirkstoffs in der Zubereitung praktisch keine Rolle, entscheidend ist allein die Wirkstoffgewichtsmenge pro Volumeneinheit Boden, welche in ppm ( = mg/l) angegeben wird. Man füllt den Boden in Töpfe und läßt diese bei Raumtemperatur stehen.

Nach 24 Stunden werden die Testtiere in den behandelten Boden gegeben und nach weiteren 2 bis 7 Tagen wird der Wirkungsgrad des Wirkstoffs durch Auszählen der toten und lebenden Testinsekten in % bestimmt. Der Wirkungsgrad ist 100 %, wenn alle Testinsekten abgetötet worden sind, er ist 0 %, wenn noch genau so viele Testinsekten leben wie bei der unbehandelten Kontrolle.

Bei diesem Test zeigen z.B. die folgenden Verbindungen der Herstellungsbeispiele überlegene Wirkung gegenüber dem Stand der Technik: 1.

Beispiel C

$LD_{100}$-Test

Testtiere: Sitophilus granarius
Zahl der Testtiere: 25
Lösungsmittel: Aceton

2 Gewichtsteile Wirkstoff werden in 1000 Volumenteilen Lösungsmittel aufgenommen. Die so erhaltene Lösung wird mit weiterem Lösungsmittel auf die gewünschten Konzentrationen verdünnt.

2,5 ml Wirkstofflösung werden in eine Petrischale pipettiert. Auf dem Boden der Petrischale befindet sich ein Filterpapier mit einem Durchmesser von etwa 9,5 cm. Die Petrischale bleibt so lange offen stehen, bis das Lösungsmittel vollständig verdunstet ist. Je nach Konzentration der Wirkstofflösung ist die Menge Wirkstoff pro $m^2$ Filterpapier verschieden hoch. Anschließend gibt man die angegebene Anzahl der Testtiere in die Petrischale und bedeckt sie mit einem Glasdeckel.

Der Zustand der Testtiere wird 3 Tage nach Ansetzen der Versuche kontrolliert. Bestimmt wird die Abtötung in %. Dabei bedeutet 100 %, daß alle Testtiere abgetötet wurden; 0 % bedeutet, daß keine Testtiere abgetötet wurden.

Bei diesem Test zeigen z.B. die folgenden Verbindungen der Herstellungsbeispiele überlegene Wirkung gegenüber dem Stand der Technik: 1,2.

Beispiel D

$LT_{100}$-Test für Dipteren

Testtiere: Musca domestica, resistent
Zahl der Testtiere: 25
Lösungsmittel: Aceton

2 Gewichtsteile Wirkstoff werden in 1000 Volumenteilen Lösungsmittel aufgenommen. Die so erhaltene Lösung wird mit weiterem Lösungsmittel auf die gewünschten geringeren Konzentrationen verdünnt.

2,5 ml Wirkstofflösung werden in eine Petrischale pipettiert. Auf dem Boden der Petrischale befindet sich ein Filterpapier mit einem Durchmesser von etwa 9,5 cm. Die Petrischale bleibt so lange offen stehen, bis das Lösungsmittel vollständig verdunstet ist. Je nach Konzentration der Wirkstofflösung ist die Menge Wirkstoff pro $m^2$ Filterpapier verschieden hoch. Anschließend gibt man die angegebene Anzahl der Testtiere in die Petrischale und bedeckt sie mit einem Glasdeckel.

Der Zustand der Testtiere wird laufend kontrolliert. Es wird diejenige Zeit ermittelt, welche für einen 100 %igen knock down-Effekt notwendig ist.

Bei diesem Test zeigen z.B. die folgenden Verbindungen der Herstellungsbeispiele überlegene Wirkung gegenüber dem Stand der Technik: 1,2.

Beispiel F

Test mit Lucilia cuprina res.-Larven

Emulgator: 35 Gewichtsteile Äthylenglykolmonomethyläther
35 Gewichtsteile Nonylphenolpolyglykoläther

Zur Herstellung einer zweckmäßigen Wirkstoffzubereitung vermischt man drei Gewichtsteile Wirkstoff mit sieben Gewichtsteilen des oben angegebenen Lösungsmittel-Gemisches und verdünnt das so erhaltene Konzentrat mit Wasser auf die jeweils gewünschte Konzentration.

Etwa 20 Lucilia cuprina res.-Larven werden in ein Teströhrchen gebracht, welches ca. 1 $cm^2$ Pferdefleisch und 0,5 ml der Wirkstoffzubereitung enthält. Nach 24 Stunden wird der Abtötungsgrad bestimmt.

Bei diesem Test zeigen z.B. die folgenden Verbindungen der Herstellungsbeispiele überlegene Wirkung gegenüber dem Stand der Technik: 1,2.

Beispiel F

Test mit Musca autumnalis

Lösungsmittel: 35 Gewichtsteile Äthylenglykolmonomethyläther
35 Gewichtsteile Nonylphenolpolylgkyoläther

Zur Herstellung einer zweckmäßigen Wirkstoffzubereitung vermischt man drei Gewichtsteile Wirkstoff mit sieben Gewichtsteilen des oben angegebenen Lösungsmittelgemisches und verdünnt das so erhaltene Konzentrat mit Wasser auf die jeweils gewünschte Konzentration.

10 adulte Musca autumnalis werden in Petrischalen gebracht,, die Filterpapierscheiben entsprechender Größe enthalten, die einen Tag vor Versuchsbeginn mit 1 ml der zu testenden Wirkstoffzubereitung durchtränkt wurden. Nach 3 Stunden wird der Abtötungsgrad bestimmt.

Bei diesem Test zeigen z.B. die folgenden Verbindungen der Herstellungsbeispiele überlegene Wirkung gegenüber dem Stand der Technik: 1.

Beispiel G

Test mit Boophilus microplus resistent

Lösungsmittel: 35 Gewichtsteile Äthylenglykolmonomethyläther
35 Gewichtsteile Nonylphenolpolylgkyoläther

Zur Herstellung einer zweckmäßigen Wirkstoffzubereitung vermischt man drei Gewichtsteile Wirkstoff mit sieben Gewichtsteilen des oben angegebenen Lösungsmittel-Gemisches und verdünnt das so erhaltene Konzentrat mit Wasser auf die gewünschte Konzentration.

10 adulte Boophilus microplus res. werden in die zu testende Wirkstoffzubereitung 1 Minute getaucht. Nach Überführung in Plastikbecher und Aufbewahrung in einem klimatisierten Raum wird der Abtötungsgrad bestimmt.

Bei diesem Test zeigen z.B. die folgenden Verbindungen der Herstellungsbeispiele überlegene Wirkung gegenüber dem Stand der Technik: 1,2.

Beispiel H

Test mit Psoroptes cuniculi

Lösungsmittel: 35 Gewichtsteile Äthylenglykolmonomethyläther
35 Gewichtsteile Nonylphenolpolyglykoläther

Zur Herstellung einer zweckmäßigen Wirkstoffzubereitung vermischt man drei Gewichtsteile Wirkstoff mit sieben Gewichtsteilen des oben angegebenen Lösungsmittel-Gemisches und verdünnt das so erhaltene Konzentrat mit Wasser auf die gewünschte Konzentration.

Etwa 10 - 25 Psoroptes cuniculi werden in 1 ml der zu testenden Wirkstoffzubereitung gebracht, die in Tablettennester einer Tiefziehverpackung pipettiert wurden. Nach 24 Stunden wird der Abtötungsgrad bestimmt.

Bei diesem Test zeigen z.B. die folgenden Verbindungen der Herstellungsbeispiele überlegene Wirkung gegenüber dem Stand der Technik: 1.

Beispiel J

Test mit Stomoxys calcitrans

Lösungsmittel: 35 Gewichtsteile Äthylenglykolmonomethyläther
35 Gewichtsteile Nonylphenolpolyglykoläther

Zur Herstellung einer zweckmäßigen Wirkstoffzubereitung vermischt man drei Gewichtsteile Wirkstoff mit sieben Gewichtsteilen des oben angegebenen Lösungsmittelgemisches und verdünnt das so erhaltene Konzentrat mit Wasser auf die jeweils gewünschte Konzentration.

10 adulte Stomoxys calcitrans werden in Petrischalen gebracht, die Filterpapierscheiben entsprechender Größe enthalten, die einen Tag vor Versuchsbeginn mit 1 ml der zu testenden Wirkstoffzubereitung durchtränkt wurden. Nach 3 Stunden wird der Abtötungsgrad bestimmt.

Bei diesem Test zeigen z.B. die folgenden Verbindungen der Herstellungsbeispiele überlegene Wirkung gegebenüber dem Stand der Technik: 1.

Patentansprüche:

1. Fluorsubstituierte Spirocarbonsäurebenzylester der Formel I

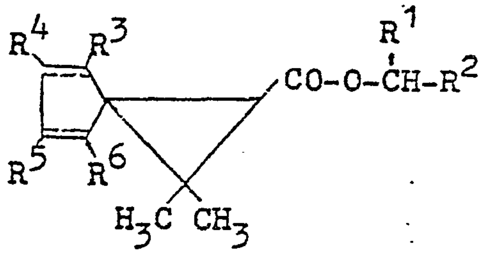

(I)

in welcher

$R^1$ für Wasserstoff, Cyano, Alkyl, Alkenyl oder Alkinyl, mit jeweils bis zu 4 Kohlenstoffatomen,

$R^2$ für einen durch Halogen und/oder gegebenenfalls halogen-substituiertes Phenoxy substituierten Phenyl-Rest steht mit der Maßgabe, daß der Rest $R^2$ insgesamt wenigstens einen Fluor-Substituenten enthält,

$R^3$, $R^4$, $R^5$ und $R^6$ entweder für Wasserstoff, Halogen, Alkyl, oder jeweils $R^3$ und $R^4$ und/oder $R^5$ und $R^6$ zusammen für Alkandiyl (Alkylen) oder für einen anellierten Benzorest stehen, und die mit $R^3$, $R^4$, $R^5$ und $R^6$ verbundenen C-Atome des spriocyclischen Ringes sowohl doppelt als auch einfach miteinander verknüpft sein können.

2. Verfahren zur Herstellung der fluorsubstituierten Spirocarbonsäurebenzylester der Formel I, dadurch gekennzeichnet, daß man Spirocarbonsäuren der Formel II

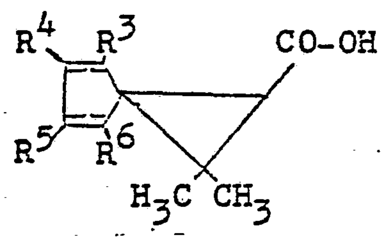

(II)

in welcher

$R^3$, $R^4$, $R^5$ und $R^6$ die in Anspruch 1 angegebenen Bedeutungen haben,

oder reaktionsfähige Derivate derselben

mit Alkoholen der Formel III

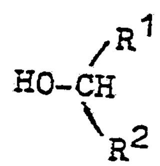

(III)

in welcher

$R^1$ und $R^2$ die in Anspruch 1 angegebenen Bedeutungen haben,

oder mit reaktionsfähigen Derivaten derselben,

gegebenenfalls in Gegenwart von Säureakzeptoren und/oder Katalysatoren und gegebenenfalls unter Verwendung von Verdünnungsmitteln umsetzt.

3. Schädlingsbekämpfungsmittel, gekennzeichnet durch einen Gehalt an mindestens einem fluorsubstituierten Spirocarbonsäurebenzylester der Formel (I).

4. Verwendung von fluorsubstituierten Spirocarbonsäurebenzylestern der Formel (I) zur Bekämpfung von Schädlingen.

5. Verfahren zur Bekämpfung von Schädlingen, dadurch gekennzeichnet, daß man fluorsubstituierte Spirocarbonsäurebenzylester der Formel (I) auf Schädlinge und/oder ihren Lebensraum einwirken läßt.

6. Verfahren zur Herstellung von Schädlingsbekämpfungsmitteln, dadurch gekennzeichnet, daß man fluorsubstituierte Spirocarbonsäurebenzylester der Formel (I) mit Streckmitteln und/oder oberflächenaktiven Mitteln vermischt.

0029543

Europäisches Patentamt

# EUROPÄISCHER RECHERCHENBERICHT

Nummer der Anmeldung
EP 80 10 6910

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| DX | US - A - 3 962 458 (AMERICAN CYANAMID)<br>* Das ganze Dokument *<br>-- | 1-6 |
| DX | DE - A - 2 621 433 (BAYER)<br>* Das ganze Dokument *<br>-- | 1-6 |
| D | BE - A - 846 544 (CIBA-GEIGY)<br>* Das ganze Dokument *<br>---- | 1-6 |

KLASSIFIKATION DER ANMELDUNG (Int Cl.³)

C 07 C 69/74
69/753
121/75
67/08
A 01 N 53/00

RECHERCHIERTE SACHGEBIETE (Int. Cl.³)

C 07 C 69/753
69/74
121/75
67/08

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Den Haag | 27-01-1981 | BERTE |